# EUROPEAN PATENT SPECIFICATION

(11) **EP 4 321 386 B1**
(45) Date of publication and mention of the grant of the patent: **15.04.2026**
(21) Application number: 22210584.3
(22) Date of filing: 30.11.2022
(51) Int. Cl.: B60R 11/02

(54) **HOLDER COUPLING ASSEMBLY AND INSERTABLE HOLDER**
HALTERKUPPLUNGSANORDNUNG UND EINSETZBARER HALTER
ENSEMBLE DE COUPLAGE DE SUPPORT ET SUPPORT INSÉRABLE

(30) Priority: 10.08.2022 CN 202210957896
(43) Date of publication of application: 14.02.2024
(73) Proprietor: Xiaomi EV Technology Co., Ltd., 100176 Beijing (CN)
(72) Inventor: LIU, Shisheng, Beijing, 100176 (CN)
(74) Representative: Stöckeler, Ferdinand

(56) References cited:
- EP-A1- 2 000 364
- WO-A1-2006/010500
- US-B1- 10 583 787

## Description

### TECHNICAL FIELD

The present invention relates to the field of cars, and more particularly, to a holder coupling assembly and an insertable holder.

### BACKGROUND

With the improvement of living standards, people have higher and higher requirements for the comfort of cars. Especially when the traveling distance is long, people often eat, drink, read books and watch computers in cars.

EP2000364A1 discloses a dashboard assembly of a motor vehicle, corresponding to the holder coupling assembly according to the pre-amble of claim 1, which includes a dashboard and a connector, which is set in a hole of the dashboard and defines a seat which is accessible by opening a hatch; the connector has an electrical contact for the 12-V or 24-V electrical supply and at least one electrical contact for transmission of data and is provided with at least one retention hole for withholding a support of a portable electronic device engaging in the seat; also provided is a reinforcement system around at least part of the seat for withstanding vibrations and forces exerted, in use, by the support.

### SUMMARY

The present invention aims to solve at least one of the technical problems in the related art to a certain extent.

The invention is set out in the appended set of claims.

Therefore, embodiments of the present invention propose a holder coupling assembly. The holder coupling assembly includes: a mounting plate having an inserting opening; a fixing support fixedly coupled to the mounting plate and having an inserting cavity, an opening of the inserting cavity being opposite to the inserting opening, and the fixing support forming a first coupling portion configured to couple an insertable holder; a door at the inserting opening, the door being configured to switch between an open position and a closed position relative to the inserting opening; and a locking tongue assembly in the inserting cavity, the locking tongue assembly being configured to stop the door when the door is in the closed position. The locking tongue assembly includes a slidable locking tongue, and an end of the locking tongue has a stop portion and an unlocking portion, configured to stop or release the opening of the door.

By providing the door and the locking tongue assembly, the holder coupling assembly according to embodiments of the present invention effectively prevents foreign matters from entering into the inserting cavity, and makes the holder coupling assembly cleaner and less messy when the insertable holder is not mounted.

Optionally, the door is hinged with the mounting plate or the fixing support. A first elastic member is in the inserting cavity and configured to act on the door and provide the door with a restoring force for switching the door into the closed position.

Optionally, the locking tongue assembly includes a second elastic member and a coupling frame. The coupling frame is fixedly coupled to the mounting plate or the fixing support, the locking tongue is in a sliding fit with the coupling frame, and the second elastic member is configured to act on the locking tongue and the coupling frame, and the locking tongue is configured to slide elastically relative to the coupling frame.

Optionally, the stop portion has a first inclined surface on a side of the stop portion facing away from the inserting opening, the stop portion has a stop surface on a side of the stop portion facing toward the inserting opening, and the door is configured to move from the open position to the closed position by rotating and squeezing the first inclined surface and be stopped by the stop surface. The unlocking portion has a second inclined surface on a side of the unlocking portion facing toward the inserting opening. The door or the mounting plate has a slot, and the slot is opposite to the second inclined surface.

Optionally, the unlocking portion has a third inclined surface on a side of the unlocking portion facing away from the inserting opening, and the door is configured to move from the open position to the closed position by rotating and squeezing the third inclined surface and secondly squeezing the first inclined surface, and be stopped by the stop surface.

Optionally, the end of the locking tongue has two stop portions and one unlocking portion, and the two stop portions are symmetrically on two sides of the unlocking portion.

Optionally, the mounting plate has a first inserting portion surrounding the inserting opening, and the first inserting portion is extended into the inserting cavity and snapped with the fixing support.

Optionally, the first coupling portion includes an elastic snap configured to couple to the insertable holder.

Optionally, the first coupling portion has a central cavity at a center of the coupling portion, there are at least two elastic snaps, and the at least two elastic snaps surround the central cavity.

Embodiments of the present invention further provide an insertable holder adapted to be inserted to the holder coupling assembly according to embodiments of the present invention. The insertable holder includes: a bearing portion configured to carry an item; and a second inserting portion, a first end of the second inserting portion being coupled to the bearing portion, a second end of the second inserting portion having a second coupling portion, and the second inserting portion being configured to pass through the inserting opening and enter into the inserting cavity, and to be fitted with the first coupling portion through the second coupling portion.

Optionally, the second coupling portion includes a snapping groove or a snapping hole configured to be coupled to the first coupling portion.

Optionally, the second inserting portion has an unlocking inserting sheet, and the unlocking inserting sheet is located at the second end of the second inserting portion and configured to release the stop of the locking tongue assembly to the door.

Optionally, the unlocking inserting sheet is configured to move between a first position and a second position relative to the second inserting portion, the unlocking inserting sheet is located in the first position when releasing the stop of the locking tongue assembly to the door, and the unlocking inserting sheet is located in the second position when the second coupling portion is fitted with the first coupling portion.

Additional aspects and advantages of the present invention will be given in part in the following description, become apparent in part from the following description, or be learned from the practice of the present invention.

### BRIEF DESCRIPTION OF THE DRAWINGS

Accompanying drawings herein are incorporated into the specification and constitute a part of the specification, show embodiments consistent with the present invention, and are used to explain the principles of the present invention together with the specification.
FIG. 1 is a perspective view of a holder coupling assembly according to an embodiment of the present invention;
FIG. 2 is a sectional view of a holder coupling assembly according to an embodiment of the present invention;
FIG. 3 is a sectional view of a fixing support according to an embodiment of the present invention;
FIG. 4 is a schematic view illustrating the mounting of a mounting plate and a door according to an embodiment of the present invention;
FIG. 5 is a perspective view of a locking tongue assembly according to an embodiment of the present invention;
FIG. 6 is a perspective view of a locking tongue according to an embodiment of the present invention;
FIG. 7 is a side view of a locking tongue according to an embodiment of the present invention;
FIG. 8 is a perspective view illustrating an item placed on an insertable holder inserted to a holder coupling assembly according to an embodiment of the present invention;
FIG. 9 is a sectional view illustrating an item placed on an insertable holder inserted to a holder coupling assembly according to an embodiment of the present invention;
FIG. 10 is a perspective view of an insertable holder according to an embodiment of the present invention;
FIG. 11 is a sectional view of an insertable holder according to an embodiment of the present invention.

Reference numerals:
1 -item;
110 - holder coupling assembly;
10 - mounting plate; 11 inserting opening; 12 - first inserting portion;
20 - fixing support; 21 - inserting cavity; 22 - a first coupling portion; 221 elastic snap; 222-central cavity;
30-door; 31 - first elastic member; 32- slot;
40 - locking tongue assembly; 41 - locking tongue; 411 - stop portion; 4111 - first inclined surface; 4112 - stop surface; 412 unlocking portion; 4121 - second inclined surface; 4122 - third inclined surface; 42 second elastic member; 43 - coupling frame;
100 -insertable holder; 101- bearing portion; 102- second inserting portion; 1021 - second coupling portion; 10211- snapping groove or snapping hole; 103- unlocking inserting sheet.

### DETAILED DESCRIPTION

Embodiments of the present invention are described in detail below, and examples of embodiments are shown in the accompanying drawings. The following embodiments described with reference to the accompanying drawings are exemplary and are intended to explain the present invention rather than limit the present invention.

In the related art, a table plate or a holder is usually arranged on a seat back or a dashboard in a car to meet the needs of people to eat, drink, read books and watch computers in the car. Such a table plate or holder is usually coupled to corresponding positions by means of a shelf or magnet adsorption.

The table plate or the holder mounted in the relevant art has the following problems: The holder or the table plate is not firmly coupled, and there is a risk of falling off. When the table plate or the holder is not mounted, coupling holes or other coupling structures usually appear at the mounting position (the seat back or the dashboard, etc.), which affects the cleanliness of the car.

In this embodiment, a holder coupling assembly 110 is first provided. The holder coupling assembly 110 is configured to couple an insertable holder and ensure a stable state of the insertable holder. The holder coupling assembly 110 may be integrated into a car seat or other components that need to be equipped with the insertable holder. The insertable holder may be equipped with books, PADs and other items.

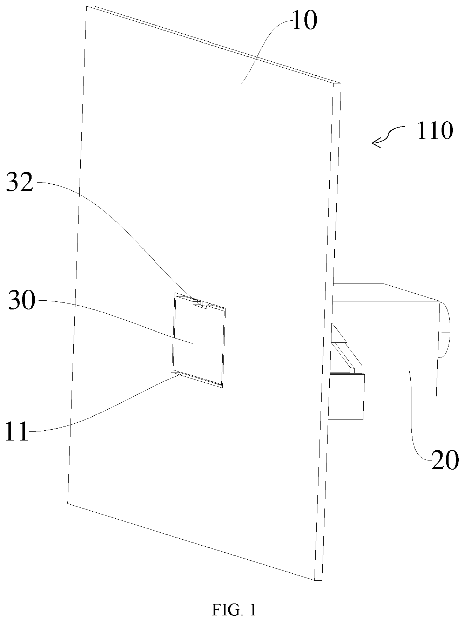

As illustrated in FIGS. 1 to 2, the holder coupling assembly 110 includes: a mounting plate 10, a fixing support 20, a door 30 and a locking tongue assembly 40. The mounting plate 10 has an inserting opening 11, and the inserting opening 11 is an entrance configured to allow the insertion of the insertable holder. The inserting opening 11 may be square, circular, triangular, regular polygonal, etc., which is designed according to a shape of an insertable portion of the insertable holder specifically.

The fixing support 20 is fixedly coupled to the mounting plate 10, and has an inserting cavity 21. An opening of the inserting cavity 21 is opposite to the inserting opening 11. The fixing support 20 forms a first coupling portion 22 configured to couple to the insertable holder 100. After the insertable portion of the insertable holder enters into the inserting cavity 21, the insertable portion may be coupled to the fixing support 20 through the first coupling portion 22, thus ensuring that the insertable holder is stably on the holder coupling assembly 110.

The door 30 is at the inserting opening 11. The door 30 is configured to switch between an open position and a closed position relative to the inserting opening 11. When the insertable holder is not required to be mounted, the door 30 is closed, thus preventing foreign matters from entering into the inserting cavity 21 and improving the neatness. When the insertable holder is required to be mounted, the insertable portion of the insertable holder pushes the door 30 to open, enters into the inserting cavity 21, and is coupled to the first coupling portion 22.

The locking tongue assembly 40 is in the inserting cavity 21 and configured to stop the door 30 when the door 30 is in the closed position, thus preventing the door 30 from being opened inadvertently.

By providing the door 30 and the locking tongue assembly 40, the holder coupling assembly 110 of above embodiments effectively prevents foreign matters from entering into the inserting cavity 21, and makes the holder coupling assembly 110 cleaner and less messy when the insertable holder is not mounted.

In some embodiments, the door 30 is hinged with the mounting plate 10 or the fixing support 20, and may rotate relative to the mounting plate 10 or the fixing support 20, so that the door 30 may switch between the open position and the closed position conveniently. A first elastic member 31 is in the inserting cavity 21 and acts on the door 30, so that the door 30 is provided with a restoring force for switching the door 30 into the closed position.

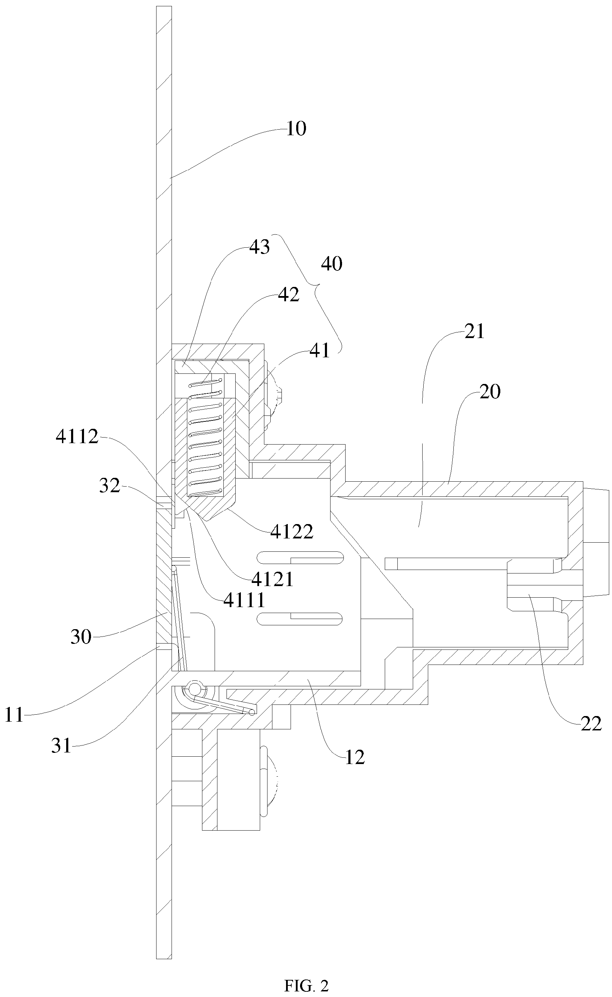

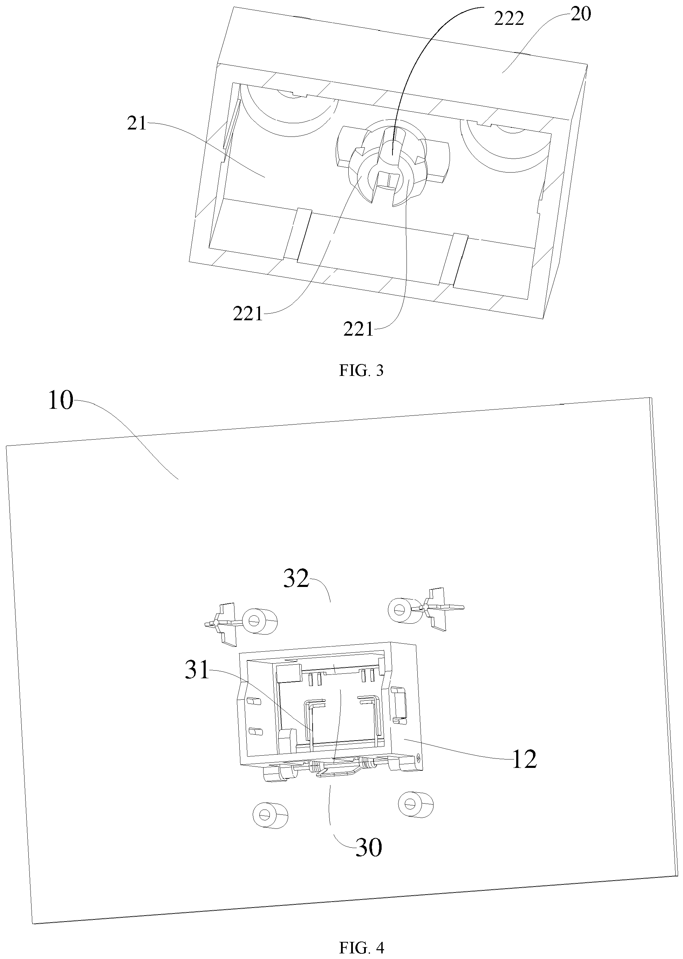

Specifically, as illustrated in FIGS. 2 and 4, the first elastic member 31 may be a torsion spring, to provide the door 30 with an elastic force for closing, so that the door 30 may be kept in the closed position when there is no insertable holder.

According to the present invention, the locking tongue assembly 40 includes a locking tongue 41, a second elastic member 42, and a coupling frame 43. The coupling frame 43 is fixedly coupled to the mounting plate 10 or the fixing support 20, and the locking tongue 41 is in a sliding fit with the coupling frame 43. As shown in FIG. 2, the locking tongue 41 may slide in an up-down direction relative to the coupling frame 43, a stop to the door 30 may be released when the locking tongue 41 slides upward, and the stop to the door 30 may be formed when the locking tongue 41 slides downward.

The second elastic member 42 acts on the locking tongue 41 and the coupling frame 43, so that the locking tongue 41 is configured to slide elastically relative to the coupling frame 43. In a natural state, the locking tongue 41 slides downward under the action of the second elastic member 42 to a lowest end, and slides upward when the locking tongue 41 is squeezed by other components.

Specifically, the second elastic member 42 may be a spring, and the spring is arranged between the locking tongue 41 and the coupling frame 43 in a compressed state. The coupling frame 43 may be coupled to the mounting plate 10 or the fixing support 20 by a screw or by a snap, as long as the stable coupling between them can be ensured.

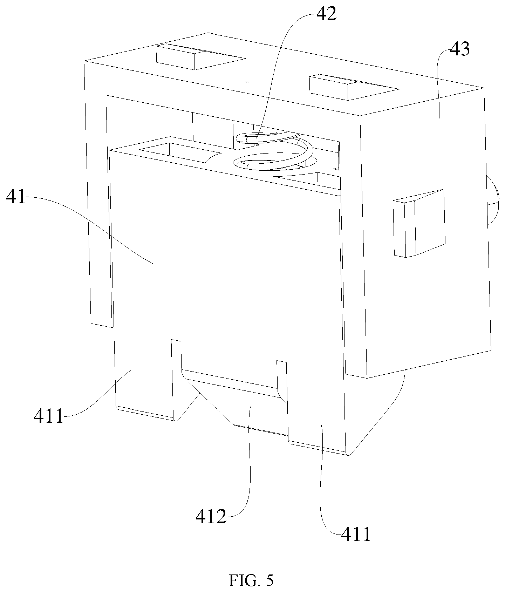

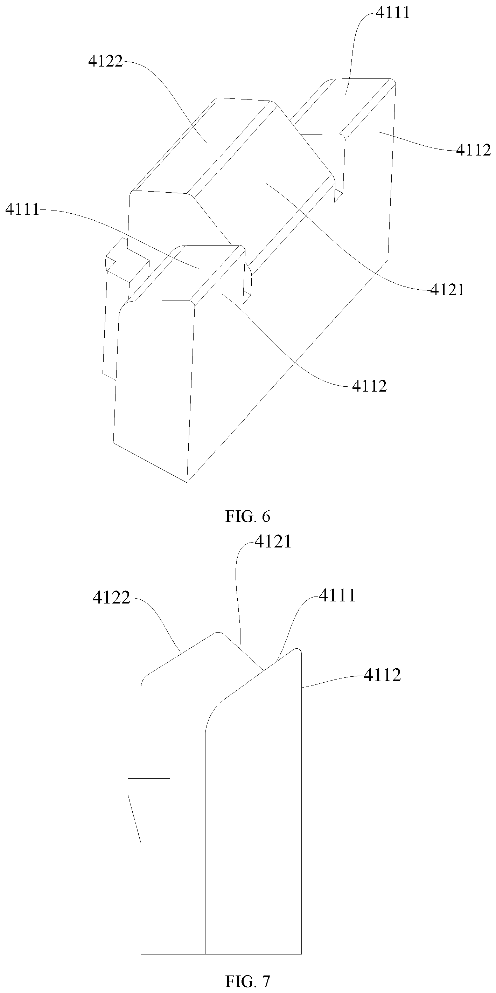

According to the present invention, as illustrated in FIG. 5, an end of the locking tongue 41 has a stop portion 411 and an unlocking portion 412. As illustrated in FIGS. 6 and 7, the stop portion 411 has a first inclined surface 4111 on a side facing away from the inserting opening 11, the stop portion 411 has a stop surface 4112 on a side facing toward the inserting opening 11, and the door 30 is configured to move from the open position to the closed position by rotating and squeezing the first inclined surface 4111 and is blocked by the stop surface 4112. The unlocking portion 412 has a second inclined surface 4121 on the side facing toward the inserting opening 11, the door 30 or the mounting plate 10 has a slot 32, and the slot 32 is opposite to the second inclined surface 4121. First, the insertable portion of the insertable holder may enter the inserting cavity 21 partially through the slot 32. At this time, the door 30 is still in the closed position. The insertable portion of the insertable holder pushes the second inclined surface 4121, so that the locking tongue 41 slides upward until the stop surface 4112 releases the stop to the door 30. The insertable portion of the insertable holder continues to be inserted inward, to push the door 30, thus pushing the door 30 to the open position. The insertable portion of the insertable holder is inserted inward until the insertable portion is coupled to the first coupling portion 22. Now the mounting of the insertable holder is completed.

The locking tongue 41 has the stop portion 411 and the unlocking portion 412, so that the effective stop of the locking tongue 41 to the door 30 is ensured, and moreover the door 30 can be opened smoothly when the insertable holder is mounted.

It should be noted that the way to open the door 30 is not limited to this scheme. The door 30 switches into the closed position under the action of the first elastic member 31. The door 30 may also be opened by pushing the door 30 through the insertable portion of the insertable holder to overcome an elastic force of the first elastic member 31 and a stopping force of the locking tongue assembly 40.

In some embodiments, the unlocking portion 412 has a third inclined surface 4122 on the side facing away from the inserting opening 11. The door 30 moves from the open position to the closed position by firstly rotating and squeezing the third inclined surface 4122, and secondly squeezing the first inclined surface 4111, and is stopped by the stop surface 4112. That is to say, the third inclined surface 4122 plays the role of preliminary guidance, to ensure that the door 30 may smoothly move to the first inclined surface 4111, which slides on and rubs against the first inclined surface 4111, and squeeze the locking tongue 41 until the door 30 is stopped by the stop surface 4112.

Further, the end of the locking tongue 41 has two stop portions 411 and one unlocking portion 412, and the two stop portions 411 are symmetrical on two sides of the unlocking portion 412, thus ensuring that the door 30 may stably push the locking tongue 41 to slide upwards.

As illustrated in FIGS. 2 and 4, the mounting plate 10 has a first inserting portion 12 surrounding the inserting opening 11. The first inserting portion 12 extends into the inserting cavity 21 and is snapped with the fixing support 20. By providing the first inserting portion 12, the mounting plate 10 is more firmly coupled to the fixing support 20. The first inserting portion 12 and the mounting plate 10 may be integrally formed, and processed by one set of molds in one process.

Further, the first inserting portion 12 may closely abut on an inner wall of the inserting cavity 21, thus having a guiding effect to certain extent and improving the mounting accuracy.

In some embodiments, as illustrated in FIG. 3, the first coupling portion 22 includes an elastic snap 221 configured to couple to the insertable holder 100. The insertable holder 100 has a snapping groove or a snapping hole 10211, so that the insertable holder 100 may be snapped with the first coupling portion 22. When detaching, the insertable holder 100 only needs to be pulled out with force, so that the elastic snap 221 is separated from the snapping groove or the snapping hole 10211, and then the insertable holder 100 may be detached.

Further, the first coupling portion 22 has a central cavity 222 at a center, at least two elastic snaps 221 are provided, and the at least two elastic snaps 221 surround the central cavity 222. Therefore, when the insertable holder 100 is pulled out by force, the elastic snap 221 may be elastically bent toward the central cavity 222, so that the elastic snap 221 is separated from the snapping groove or the snapping hole 10211.

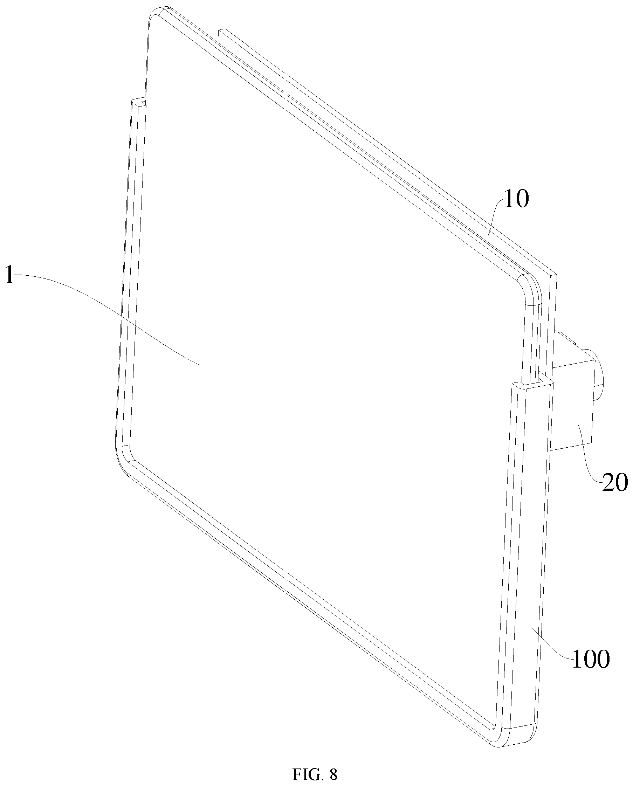

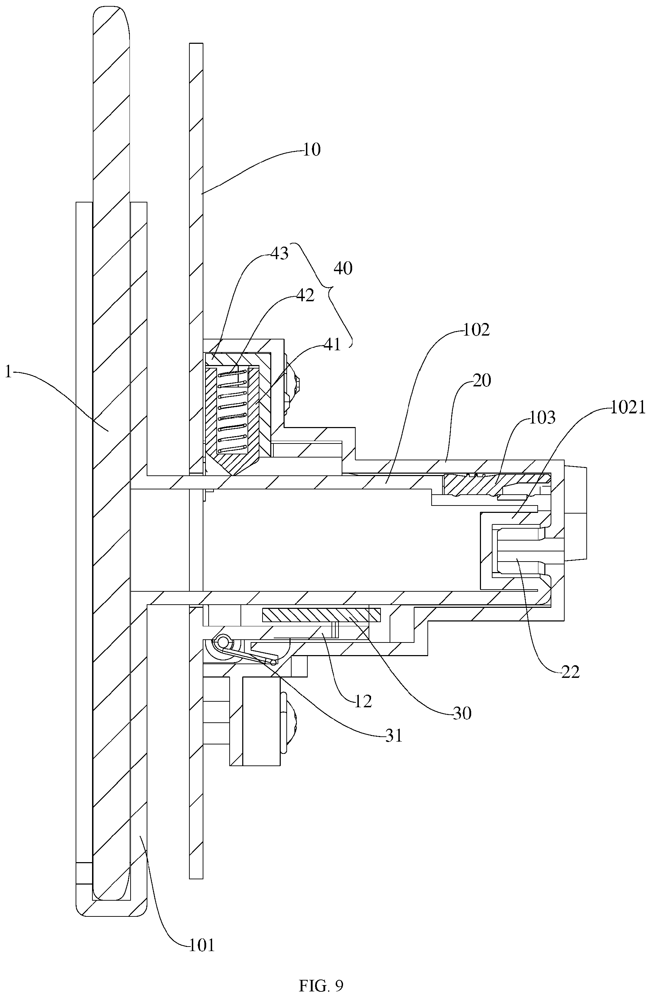

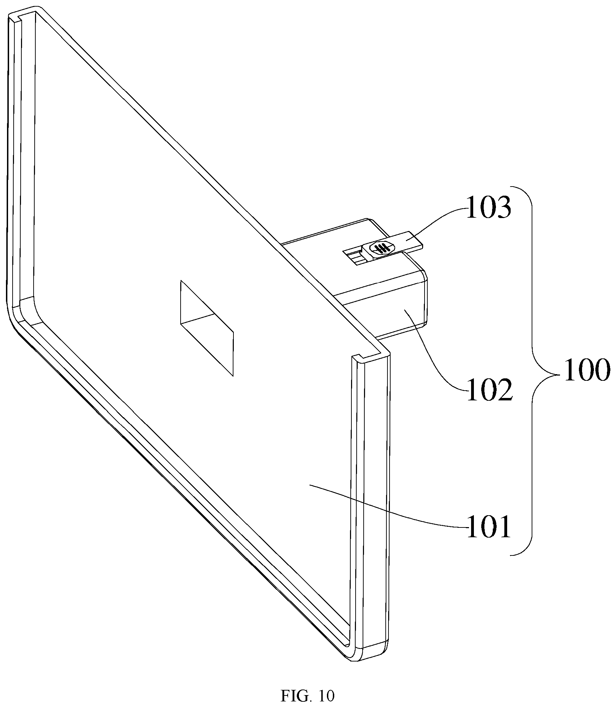

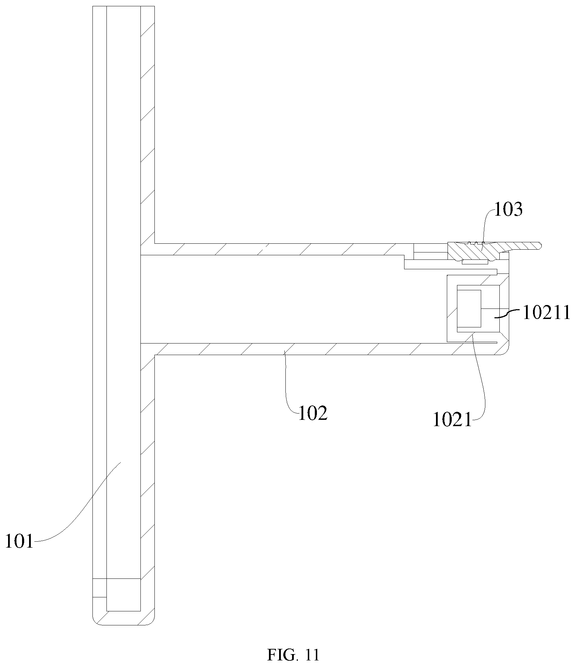

This embodiment further provides an insertable holder 100. As illustrated in FIGS. 8 to 11, the insertable holder 100 is adapted to be inserted to the holder coupling assembly 110 of any of the above-described embodiments. The insertable holder 100 includes: a bearing portion 101 and a second inserting portion 102. The bearing portion 101 is configured to carry an item 1. The item 1 may be a tablet computer, a book or other articles for daily use.

A first end of the second inserting portion 102 is coupled to the bearing portion 101. A second end of the second inserting portion 102 has a second coupling portion 1021. The second inserting portion 102 is configured to pass through the inserting opening 11 and enter into the inserting cavity 21, and to be fitted with the first coupling portion 22 through the second coupling portion 1021. Thus, the stable coupling between the insertable holder 100 and the fixing support 20 is realized.

For example, the second coupling portion 1021 includes the snapping groove or the snapping hole 10211 configured to be coupled to the first coupling portion 22. The elastic snap 221 may be fitted in the snapping groove or the snapping hole 10211, and the number of the snapping grooves or the snapping holes 12011 corresponds to the number of the elastic snaps 221.

In some embodiments, the second inserting portion 102 has an unlocking inserting sheet 103, and the unlocking inserting sheet 103 is located at the second end of the second inserting portion 102 and configured to release the stop of the locking tongue assembly 40 to the door 30. When mounting the insertable holder 100 to the holder coupling assembly 110, the unlocking inserting sheet 103 first enters into the inserting cavity 21 through the slot 32. At this time, the door 30 is still in the closed position. The unlocking inserting sheet 103 pushes the second inclined surface 4121, so that the locking tongue 41 slides upward until the stop surface 4112 releases the stop to the door 30. The second inserting portion 102 continues to be inserted into the inserting cavity 21, to push the door 30, thus pushing the door 30 to the open position. The second inserting portion 102 is inserted into the inserting cavity 21, until the second coupling portion 1021 on the second inserting portion 102 is coupled to the first coupling portion 22. Now the mounting of the insertable holder 100 is completed.

In some embodiments, the unlocking inserting sheet 103 is configured to move between a first position and a second position relative to the second inserting portion 102. The unlocking inserting sheet 103 is located in the first position when releasing the stop of the locking tongue assembly 40 to the door 30, and the unlocking inserting sheet 103 is located in the second position when the second coupling portion 1021 is fitted with the first coupling portion 22.

Therefore, when the insertable holder 100 is required to be mounted, the unlocking inserting sheet 103 slides to the first position first, so that the unlocking inserting sheet 103 may release the stop of the locking tongue assembly 40 to the door 30 conveniently. When the second inserting portion 102 moves toward a bottom end of the inserting cavity 21, the unlocking inserting sheet 103 may be stopped by an inner wall of the bottom end of the inserting cavity 21, and thus slide to the second position.

In the description of the present invention, it shall be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial" and "peripheral" should be construed to refer to the orientation and position as then described or as shown in the drawings under discussion. These relative terms are only for convenience of description and do not indicate or imply that the device or member referred to must have a particular orientation, or be constructed and operated in a particular orientation. Thus, these terms shall not be construed as limitation on the present invention.

In addition, the terms "first" and "second" are only used for descriptive purposes and cannot be understood as indicating or implying a relative importance or implicitly indicating the number of indicated technical features. Thus, the features defined by "first" and "second" may include at least one of the features explicitly or implicitly. In the description of the present invention, "a plurality of" means at least two, such as two or three, unless otherwise expressly and specifically defined.

In the present invention, unless otherwise expressly defined, terms such as "mounted," "connected," "coupled," and "fixed" shall be understood broadly, and may be, for example, fixed connections, detachable connections, or integral connections; may also be mechanical or electrical connections or intercommunication; may also be direct connections or indirect connections via intervening media; may also be inner communications or interactions of two members. For those skilled in the art, the specific meaning of the above terms in the present invention can be understood according to the specific situations.

In the present invention, unless otherwise expressly defined and specified, a structure in which a first feature is "on" or "below" a second feature may include an embodiment in which the first feature is in direct contact with the second feature, or may further include an embodiment in which the first feature and the second feature are in indirect contact through intermediate media. Furthermore, a first feature "on," "above," or "on top of" a second feature may include an embodiment in which the first feature is right or obliquely "on," "above," or "on top of" the second feature, or just means that the first feature is at a height higher than that of the second feature, while a first feature "below," "under," or "on bottom of" a second feature may include an embodiment in which the first feature is right or obliquely "below," "under," or "on bottom of" the second feature, or just means that the first feature is at a height lower than that of the second feature.

## Claims

1. A holder coupling assembly (110), comprising:
a mounting plate (10) having an inserting opening (11);
a fixing support (20) coupled to the mounting plate (10) and having an inserting cavity (21), the opening of the inserting cavity (21) being opposite to the inserting opening (11), and the fixing support (20) forming a first coupling portion (22) configured to couple an insertable holder (100);
a door (30) at the inserting opening (11), the door (30) being configured to switch between an open position and a closed position relative to the inserting opening (11); and
a locking tongue assembly (40) in the inserting cavity (21), the locking tongue assembly (40) being configured to stop the door (30) when the door (30) is in the closed position,
**characterized in that** the locking tongue assembly (40) comprises a slidable locking tongue (41), and an end of the locking tongue (41) has a stop portion (411) and an unlocking portion (412), configured to stop or release the opening of the door (30).

2. The holder coupling assembly (110) according to claim 1, wherein the door (30) is on the mounting plate (10) or the fixing support (20); and
a first elastic member (31) is in the inserting cavity (21) and configured to act on the door (30) and provide the door (30) with a restoring force for switching the door (30) into the closed position.

3. The holder coupling assembly (110) according to claim 1 or 2, wherein the locking tongue assembly (40) comprises a second elastic member (42) and a coupling frame (43); and
the coupling frame (43) is coupled to the mounting plate (10) or the fixing support (20), the locking tongue (41) is in a sliding fit with the coupling frame (43), and the second elastic member (42) is configured to act on the locking tongue (41) and the coupling frame (43), and the locking tongue (41) is configured to slide elastically relative to the coupling frame (43).

4. The holder coupling assembly (110) according to claim 3, wherein the stop portion (411) has a first inclined surface (4111) on a side of the stop portion (411) facing away from the inserting opening (11), the stop portion (411) has a stop surface (4112) on a side of the stop portion (411) facing toward the inserting opening (11), and the door (30) is configured to move from the open position to the closed position by rotating and squeezing the first inclined surface (4111) and be blocked by the stop surface (4112);
the unlocking portion (412) has a second inclined surface (4121) on a side of the unlocking portion (412) facing toward the inserting opening (11); and
the door (30) or the mounting plate (10) has a slot (32), and the slot (32) is opposite to the second inclined surface (4121).

5. The holder coupling assembly (110) according to claim 4, wherein the unlocking portion (412) has a third inclined surface (4122) on a side of the unlocking portion (412) facing away from the inserting opening (11), and the door (30) is configured to move from the open position to the closed position by rotating and squeezing the third inclined surface (4122) and squeezing the first inclined surface (4111), and be stopped by the stop surface (4112).

6. The holder coupling assembly (110) according to claim 4 or 5, wherein the end of the locking tongue (41) has two stop portions (411) and one unlocking portion (412), and the two stop portions (411) are symmetrically on two sides of the unlocking portion (412).

7. The holder coupling assembly (110) according to any one of claims 3 to 6, wherein the second elastic member (42) is a spring arranged between the locking tongue (41) and the coupling frame (43) in a compressed state.

8. The holder coupling assembly (110) according to any one of claims 1 to 7, wherein the mounting plate (10) has a first inserting portion (12) surrounding the inserting opening (11), and the first inserting portion (12) is in the inserting cavity (21) and snapped with the fixing support (20).

9. The holder coupling assembly (110) according to claim 8, wherein the first inserting portion (12) is closely abutted on an inner wall of the inserting cavity (21).

10. The holder coupling assembly (110) according to any one of claims 1 to 9, wherein the first coupling portion (22) comprises an elastic snap (221) configured to couple to the insertable holder (100).

11. The holder coupling assembly (110) according to claim 10, wherein the first coupling portion (22) has a central cavity (222) at a center of the coupling portion (22), at least two elastic snaps (221) are provided, and the at least two elastic snaps (221) surround the central cavity(222).

12. The holder coupling assembly (110) according to any of claims 1 to 11, wherein the coupling assembly further comprises an insertable holder (100) adapted to be inserted to the holder coupling assembly 110),
the insertable holder (100) comprising:
a bearing portion (101) configured to carry an item (1); and
a second inserting portion (102), the second inserting portion (102) having a first end coupled to the bearing portion (101) and a second end having a second coupling portion (1021), and the second inserting portion (102) being configured to pass through the inserting opening (11) and enter into the inserting cavity (21), and to be fitted with the first coupling portion (22) through the second coupling portion (1021).

13. The holder coupling assembly (110) according to claim 12, wherein the second coupling portion (1021) comprises a snapping groove or a snapping hole (10211) configured to be coupled to the first coupling portion (22).

14. The holder coupling assembly (110) according to claim 12 or 13, wherein the second inserting portion (102) has an unlocking inserting sheet (103), and the unlocking inserting sheet (103) is located at the second end of the second inserting portion (102) and configured to release the stop of the locking tongue assembly (40) to the door (30).

15. The holder coupling assembly (110) according to claim 14, wherein the unlocking inserting sheet (103) is configured to move between a first position and a second position relative to the second inserting portion (102), the unlocking inserting sheet (103) is located in the first position when releasing the stop of the locking tongue assembly (40) to the door (30), and the unlocking inserting sheet (103) is located in the second position when the second coupling portion (1021) is fitted with the first coupling portion (22).

## Patentansprüche

1. Eine Halterkopplungsanordnung (110), die folgende Merkmale aufweist:
eine Befestigungsplatte (10), die eine Einführöffnung (11) aufweist;
eine Anbringungsstütze (20), die an die Befestigungsplatte (10) gekoppelt ist und eine Einführkavität (21) aufweist, wobei die Öffnung der Einführkavität (21) gegenüber der Einführöffnung (11) ist, und wobei die Anbringungsstütze (20) einen ersten Kopplungsabschnitt (22) bildet, der dazu konfiguriert ist, einen einführbaren Halter (100) zu koppeln;
eine Tür (30) an der Einführöffnung (11), wobei die Tür (30) dazu konfiguriert ist, zwischen einer offenen Position und einer geschlossenen Position in Bezug auf die Einführöffnung (11) zu wechseln; und
eine Verriegelungszungenanordnung (40) in der Einführkavität (21), wobei die Verrieglungszungenanordnung (40) dazu konfiguriert ist, die Tür (30) zu stoppen, wenn sich die Tür (30) in der geschlossenen Position befindet,
**dadurch gekennzeichnet, dass** die Verriegelungszungenanordnung (40) eine gleitfähige Verriegelungszunge (41) aufweist, und ein Ende der Verriegelungszunge (41) einen Anschlagsabschnitt (411) und einen Entriegelungsabschnitt (412) aufweist, die dazu konfiguriert sind, die Öffnung der Tür (30) zu stoppen oder freizugeben.

2. Die Halterkopplungsanordnung (110) gemäß Anspruch 1, wobei sich die Tür (30) an der Befestigungsplatte (10) oder der Anbringungsstütze (20) befindet; und
ein erstes elastisches Bauglied (31) sich in der Einführkavität (21) befindet und dazu konfiguriert ist, auf die Tür (30) zu wirken und der Tür (30) eine Rückstellkraft für das Wechseln in die geschlossene Position bereitzustellen.

3. Die Halterkopplungsanordnung (110) gemäß Anspruch 1 oder 2, wobei die Verrieglungszungenanordnung (40) ein zweites elastisches Bauglied (42) und einen Kopplungsrahmen (43) aufweist; und
der Kopplungsrahmen (43) an die Befestigungsplatte (10) oder die Anbringungsstütze (20) gekoppelt ist, wobei die Verriegelungszunge (41) mit dem Kopplungsrahmen (43) in einem Gleitsitz ist, und das zweite elastische Bauglied (42) dazu konfiguriert ist, auf die Verriegelungszunge (41) und den Kopplungsrahmen (43) zu wirken, und die Verriegelungszunge dazu konfiguriert ist, relativ zu dem Kopplungsrahmen (43) elastisch zu gleiten.

4. Die Halterkopplungsanordnung (110) gemäß Anspruch 3, wobei der Anschlagsabschnitt (411) eine erste schiefe Oberfläche (4111) an einer Seite des Anschlagsabschnitts (411) aufweist, die der Einführöffnung (11) abgewandt ist, wobei der Anschlagsabschnitt (411) eine Anschlagsoberfläche (4112) an einer Seite des Anschlagsabschnitts aufweist, die der Einführöffnung (11) zugewandt ist, und die Tür (30) dazu konfiguriert ist, sich von der offenen Position zu der geschlossenen Position durch Drehen der und Drücken auf die erste schiefe Oberfläche zu bewegen und von der Anschlagsoberfläche (4112) blockiert zu werden;
wobei der Entriegelungsabschnitt (412) eine zweite schiefe Oberfläche (4121) an einer Seite des Entriegelungsabschnitts (412) hat, die der Einführöffnung (11) zugewandt ist, und
die Tür (30) oder die Befestigungsplatte (10) einen Schlitz (32) hat, und sich der Schlitz (32) der zweiten schiefen Oberfläche (4121) gegenüber befindet.

5. Die Halterkopplungsanordnung (110) gemäß Anspruch 4, wobei der Entriegelungsabschnitt (412) eine dritte schiefe Oberfläche (4122) an der Seite des Entriegelungsabschnitts (412) hat, die der Einführöffnung (11) abgewandt ist, und die Tür (30) dazu konfiguriert ist, sich von der offenen Position in die geschlossene Position durch Drehen der und Drücken auf die dritte schiefe Oberfläche (4122) und durch Drücken auf die erste schiefe Ebene (4111) zu bewegen, und von der Anschlagsoberfläche (4112) gestoppt zu werden.

6. Die Halterkopplungsanordnung (110) gemäß Anspruch 4 oder 5,wobei das Ende der Verriegelungszunge (41) zwei Anschlagsabschnitte (411) und einen Entriegelungsabschnitt (412) hat, und die zwei Anschlagsabschnitte (411) an zwei Seiten des Entriegelungsabschnitts (412) symmetrisch angeordnet sind.

7. Die Halterkopplungsanordnung gemäß einem der Ansprüche 3 bis 6, wobei das zweite elastische Bauglied (42) eine Feder ist, die zwischen der Verriegelungszunge (41) und dem Kopplungsrahmen (43) in einem zusammengedrückten Zustand angeordnet ist.

8. Die Halterkopplungsanordnung (110) gemäß einem der Ansprüche 1 bis 7, wobei die Befestigungsplatte (10) einen ersten Einführabschnitt (12) hat, der die Einführöffnung (11) umgibt, und sich der erste Einführabschnitt (12) in der Einführkavität (21) befindet und mit der Anbringungsstütze (20) eingerastet ist.

9. Die Halterkopplungsanordnung (110) gemäß Anspruch 8, wobei der erste Einführabschnitt (12) nah an einer inneren Wand der Einführkavität (21) angrenzt.

10. Die Halterkopplungsanordnung gemäß einem der Ansprüche 1 bis 9, wobei der erste Kopplungsabschnitt (22) einen elastischen Einraster (221) aufweist, der dazu konfiguriert ist, sich an den einführbaren Halter (100) zu koppeln.

11. Die Halterkopplungsanordnung (110) gemäß Anspruch 10, wobei der erste Kopplungsabschnitt (22) eine mittige Kavität (222) in einer Mitte des Kopplungsabschnitts (22) hat, zumindest zwei elastische Einraster (221) vorgesehen sind, und die zumindest zwei elastischen Einraster (221) die mittige Kavität (222) umgeben.

12. Die Halterkopplungsanordnung (110) gemäß einem der Ansprüche 1 bis 11, wobei die Kopplungsanordnung ferner einen einführbaren Halter (100) aufweist, der dazu angepasst ist, an die Halterkopplungsanordnung (110) eingeführt zu werden,
wobei der einführbare Halter (100) folgende Merkmale aufweist:
einen Lagerabschnitt (101), der dazu konfiguriert ist, einen Gegenstand (1) zu tragen; und
einen zweiten Einführabschnitt (102), wobei der zweite Einführabschnitt (102) ein an den Trageabschnitt (101) gekoppeltes erste Ende und ein zweites Ende hat, das einen zweiten Kopplungsabschnitt (1021) hat, und der zweite Einführabschnitt (102) dazu konfiguriert ist, durch die Einführöffnung (11) zu laufen und in die Einführkavität (21) einzudringen, und mit dem ersten Kopplungsabschnitt (22) durch den zweiten Kopplungsabschnitt (1021) zusammengefügt zu sein.

13. Die Halterkopplungsanordnung (110) gemäß Anspruch 12, wobei der zweite Einführabschnitt (1021) eine Einrastnut oder ein Einrastloch (10211) aufweist, die/das dazu konfiguriert ist, an den ersten Kopplungsabschnitt (22) gekoppelt zu sein.

14. Die Halterkopplungsanordnung (110) gemäß Anspruch 12 oder 13, wobei der zweite Einführabschnitt (102) ein Entriegelungseinführblatt (103) hat, und das Entriegelungseinführblatt (103) an dem zweiten Ende des zweiten Einführabschnitts (102) platziert ist und dazu konfiguriert ist, den Anschlag der Verriegelungszungenanordnung (40) an die Tür (30) freizugeben.

15. Die Halterkopplungsanordnung gemäß Anspruch 14, wobei das Entriegelungseinführblatt (103) dazu konfiguriert ist, sich zwischen einer ersten Position und einer zweiten Position in Bezug auf den zweiten Einführabschnitt (102) zu bewegen, wobei das Entriegelungseinführblatt (103) in der ersten Position platziert ist, wenn der Anschlag der Verriegelungsanordnung (40) an die Tür (30) freigegeben ist, und das Entriegelungseinführblatt (103) in der zweiten Position platziert ist, wenn der zweite Kopplungsabschnitt (1021) mit dem ersten Kopplungsabschnitt (22) zusammengefügt ist.

## Revendications

1. Ensemble de couplage de support (110), comprenant :
une plaque de montage (10) comportant une ouverture d'insertion (11) ;
un support de fixation (20) couplé à la plaque de montage (10) et comportant une cavité d'insertion (21), l'ouverture de la cavité d'insertion (21) étant opposée à l'ouverture d'insertion (11), et le support de fixation (20) formant une première partie de couplage (22) configurée pour coupler un support insérable (100) ;
une porte (30) au niveau de l'ouverture d'insertion (11), la porte (30) étant configurée pour basculer entre une position ouverte et une position fermée par rapport à l'ouverture d'insertion (11) ; et
un ensemble de languette de verrouillage (40) dans la cavité d'insertion (21), l'ensemble de languette de verrouillage (40) étant configuré pour arrêter la porte (30) lorsque la porte (30) est en position fermée,
**caractérisé en ce que** l'ensemble de languette de verrouillage (40) comprend une languette de verrouillage coulissante (41), et une extrémité de la languette de verrouillage (41) comporte une partie d'arrêt (411) et une partie de déverrouillage (412), configurées pour arrêter ou libérer l'ouverture de la porte (30).

2. Ensemble de couplage de support (110) selon la revendication 1, dans lequel la porte (30) se trouve sur la plaque de montage (10) ou le support de fixation (20) ; et
un premier élément élastique (31) se trouve dans la cavité d'insertion (21) et est configuré pour agir sur la porte (30) et fournir à la porte (30) une force de rappel pour commuter la porte (30) en position fermée.

3. Ensemble de couplage de support (110) selon la revendication 1 ou 2, dans lequel l'ensemble de languette de verrouillage (40) comprend un deuxième élément élastique (42) et un cadre de couplage (43) ; et
le cadre de couplage (43) est couplé à la plaque de montage (10) ou au support de fixation (20), la languette de verrouillage (41) est en ajustement coulissant avec le cadre de couplage (43), et le deuxième élément élastique (42) est configuré pour agir sur la languette de verrouillage (41) et le cadre de couplage (43), et la languette de verrouillage (41) est configurée pour coulisser de manière élastique par rapport au cadre de couplage (43).

4. Ensemble de couplage de support (110) selon la revendication 3, dans lequel la partie d'arrêt (411) comporte une première surface inclinée (4111) sur un côté de la partie d'arrêt (411) faisant face en éloignement à l'ouverture d'insertion (11), la partie d'arrêt (411) comporte une surface d'arrêt (4112) sur un côté de la partie d'arrêt (411) faisant face à l'ouverture d'insertion (11), et la porte (30) est configurée pour se déplacer de la position ouverte à la position fermée en tournant et en serrant la première surface inclinée (4111) et pour être bloquée par la surface d'arrêt (4112) ;
la partie de déverrouillage (412) comporte une deuxième surface inclinée (4121) sur un côté de la partie de déverrouillage (412) faisant face à l'ouverture d'insertion (11) ; et
la porte (30) ou la plaque de montage (10) comporte une fente (32), et la fente (32) est opposée à la deuxième surface inclinée (4121).

5. Ensemble de couplage de support (110) selon la revendication 4, dans lequel la partie de déverrouillage (412) comporte une troisième surface inclinée (4122) sur un côté de la partie de déverrouillage (412) faisant face en éloignement à l'ouverture d'insertion (11), et la porte (30) est configurée pour se déplacer de la position ouverte à la position fermée en tournant et en pressant la troisième surface inclinée (4122) et en serrant la première surface inclinée (4111), et pour être arrêtée par la surface d'arrêt (4112).

6. Ensemble de couplage de support (110) selon la revendication 4 ou 5, dans lequel l'extrémité de la languette de verrouillage (41) comporte deux parties d'arrêt (411) et une partie de déverrouillage (412), et les deux parties d'arrêt (411) sont symétriques de part et d'autre de la partie de déverrouillage (412).

7. Ensemble de couplage de support (110) selon l'une quelconque des revendications 3 à 6, dans lequel le deuxième élément élastique (42) est un ressort disposé entre la languette de verrouillage (41) et le cadre de couplage (43) dans un état comprimé.

8. Ensemble de couplage de support (110) selon l'une quelconque des revendications 1 à 7, dans lequel la plaque de montage (10) comporte une première partie d'insertion (12) entourant l'ouverture d'insertion (11), et la première partie d'insertion (12) se trouve dans la cavité d'insertion (21) et est encliquetée avec le support de fixation (20).

9. Ensemble de couplage de support (110) selon la revendication 8, dans lequel la première partie d'insertion (12) est étroitement appuyée contre une paroi intérieure de la cavité d'insertion (21).

10. Ensemble de couplage de support (110) selon l'une quelconque des revendications 1 à 9, dans lequel la première partie de couplage (22) comprend un encliquetage élastique (221) configuré pour s'accoupler au support insérable (100).

11. Ensemble de couplage de support (110) selon la revendication 10, dans lequel la première partie de couplage (22) comporte une cavité centrale (222) au niveau d'un centre de la partie de couplage (22), au moins deux encliquetages élastiques (221) sont prévus, et les au moins deux encliquetages élastiques (221) entourent la cavité centrale (222).

12. Ensemble de couplage de support (110) selon l'une quelconque des revendications 1 à 11, dans lequel l'ensemble de couplage comprend en outre un support insérable (100) adapté pour être inséré dans l'ensemble de couplage de support (110), le support insérable (100) comprenant :
une partie de support (101) configurée pour supporter un élément (1) ; et
une deuxième partie d'insertion (102), la deuxième partie d'insertion (102) ayant une première extrémité couplée à la partie de support (101) et une deuxième extrémité comportant une deuxième partie de couplage (1021), et la deuxième partie d'insertion (102) étant configurée pour passer à travers l'ouverture d'insertion (11) et entrer dans la cavité d'insertion (21), et pour être ajustée avec la première partie de couplage (22) à travers la deuxième partie de couplage (1021).

13. Ensemble de couplage de support (110) selon la revendication 12, dans lequel la deuxième partie de couplage (1021) comprend une rainure d'encliquetage ou un trou d'encliquetage (10211) configuré pour être couplé à la première partie de couplage (22).

14. Ensemble de couplage de support (110) selon la revendication 12 ou 13, dans lequel la deuxième partie d'insertion (102) comporte une lame d'insertion de déverrouillage (103), et la lame d'insertion de déverrouillage (103) est située à la deuxième extrémité de la deuxième partie d'insertion (102) et configurée pour libérer l'arrêt de l'ensemble de languette de verrouillage (40) vers la porte (30).

15. Ensemble de couplage de support (110) selon la revendication 14, dans lequel la lame d'insertion de déverrouillage (103) est configurée pour se déplacer entre une première position et une deuxième position par rapport à la deuxième partie d'insertion (102), la lame d'insertion de déverrouillage (103) est située dans la première position lors du relâchement de l'arrêt de l'ensemble de languette de verrouillage (40) vers la porte (30), et la lame d'insertion de déverrouillage (103) est située dans la deuxième position lorsque la deuxième partie de couplage (1021) est ajustée avec la première partie de couplage (22).
